# EUROPEAN PATENT SPECIFICATION

(11) **EP 1 668 640 B1**
(45) Date of publication and mention of the grant of the patent: **03.10.2018**
(21) Application number: 04774343.0
(22) Date of filing: 18.08.2004
(51) Int. Cl.: G09G 5/00, H04N 5/775, H04N 5/85, H04N 21/41, H04N 21/426, H04N 21/432, H04N 21/4363, H04N 21/4402, H04N 5/765, H04N 7/01, H04N 9/79, H04N 21/488

(54) **DVD PLAYER THAT SETS OPTIMAL DISPLAY ENVIRONMENT AND OPERATING METHOD THEREOF**
DVD-PLAYER, DER DIE OPTIMALE ANZEIGEUMGEBUNG SETZT, UND BETRIEBSVERFAHREN DAFÜR
LECTEUR DVD ETABLISSANT UN ENVIRONNEMENT D'AFFICHAGE OPTIMAL ET SON PROCEDE DE FONCTIONNEMENT

(30) Priority: 22.08.2003 KR 2003058281
(43) Date of publication of application: 14.06.2006
(73) Proprietor: Samsung Electronics Co., Ltd., Suwon-si, Gyeonggi-do, 443-742 (KR)
(72) Inventor: OH, Sung-Bo, B-201 Seongdong Art, 256-5, Suwon-si, Gyeonggi-do 443-822 (KR)
(74) Representative: Hylarides, Paul Jacques
(86) International application number: PCT/KR2004/002076
(87) International publication number: WO 2005/020237

(56) References cited:
- EP-A- 1 225 762
- EP-A1- 1 014 712
- EP-A2- 1 345 115
- JP-A- 11 143 441
- US-A- 5 912 710
- US-A- 6 144 362
- US-B1- 6 252 590
- US-B1- 6 275 267

## Description

### Technical Field

The present invention relates to a DVD player and an operating method thereof. More particularly, the present invention relates to a DVD player which can automatically set an optimal display environment for a digital TV based on screen ratio and resolution information received from the digital TV, and an operating method thereof.

### Background Art

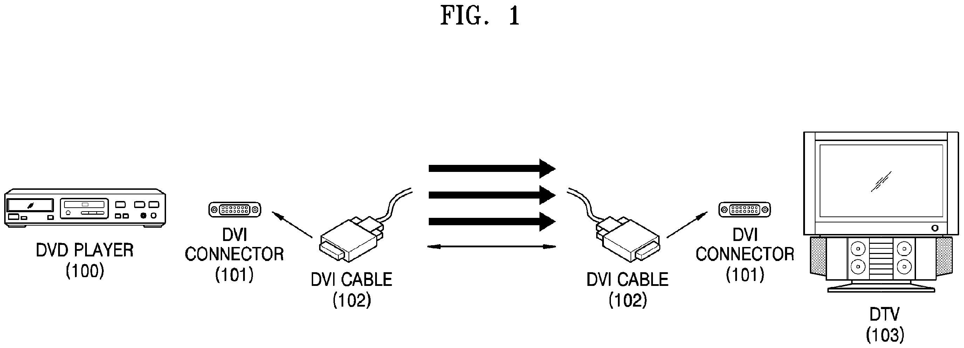

FIG. 1 is a schematic diagram of a conventional apparatus for setting an optimal display environment for a digital TV. Referring to FIG. 1, the apparatus includes a DVD player 100, a digital visual interface (DVI) connector 101, a DVI cable 102, and a digital TV 103.

The DVI cable 102 is used for transmitting digital image signals between the DVD player 100 and the digital TV 103. Digital image signals output from the DVD player 100 are transmitted to the digital TV 103 via the DVI connector 101 and the DVI cable 102. However, a user is required to manually set a display environment appropriate for the digital TV 103 based on the screen ratio and resolution of the digital TV 103 by using the DVD player 100.

For example, if the digital TV 103 has a screen ratio of 16:9 and a resolution of 720' 1080, the user is required to call a menu from the DVD player 100 and select a screen ratio and resolution appropriate for the digital TV 103 from the menu, or to manually set the screen ratio and the resolution appropriately for the digital TV 103 when reproducing a DVD using the DVD player 100.

However, for those who do not have an understanding of DVD players or do not know the specifications of the DVD player 100, setting the screen ratio and the resolution appropriately for the digital TV 103 can be very difficult.

Accordingly, a need exists for a system and method to automatically set an optimal display environment for a digital TV, including values for features such as screen ratio and resolution. Documents US5912710 and EP1225762 provide prior art solutions to this problem.

### Disclosure of Invention

### Technical Solution

The present invention provides a DVD player, which is easy to use and automatically sets an optimal display environment for a digital TV based on screen ratio and resolution information received from the digital TV, and an operating method thereof.

### Advantageous Effects

As described above, according to the present invention, there is no need for a user to manually set an optimal display environment for a digital TV. In the present invention, the optimal display environment for the digital TV is automatically set based on screen ratio and resolution information received from the TV, thus maximizing the user's convenience.

### Description of Drawings

FIG. 1 is a schematic diagram of a conventional apparatus for setting an optimal display environment for a digital TV;
FIG. 2 is a block diagram of an exemplary DVD player according to an embodiment of the present invention which is capable of setting an optimal display environment for a digital TV; and
FIG. 3 is a flowchart of an exemplary operating method of a DVD player which is capable of setting an optimal display environment for a digital TV according to an embodiment of the present invention.

### Mode for Invention

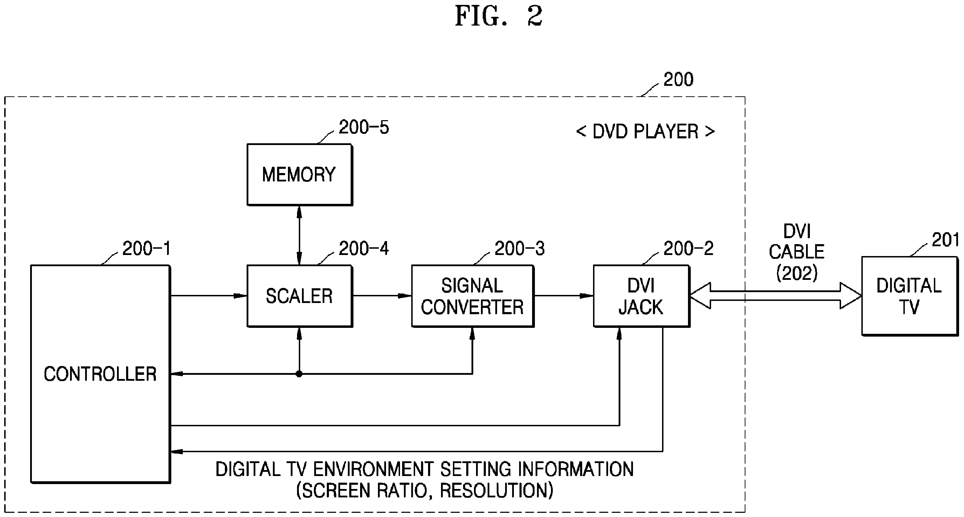

FIG. 2 is a block diagram of an exemplary DVD player 200 according to an embodiment of the present invention which can set an optimal display environment for a digital TV. Referring to FIG. 2, the DVD player 200 is connected to a digital TV 201 by a digital visual interface (DVI) connector, or cable, 202. The DVD player 200 includes a controller 200-1, a DVI jack 200-2, a signal converter 200-3, a scaler 200-4, and a memory 200-5. Signals transmitted between the DVD player 200 and the digital TV 201 pass through the DVI cable 202 and the DVI jack 200-2.

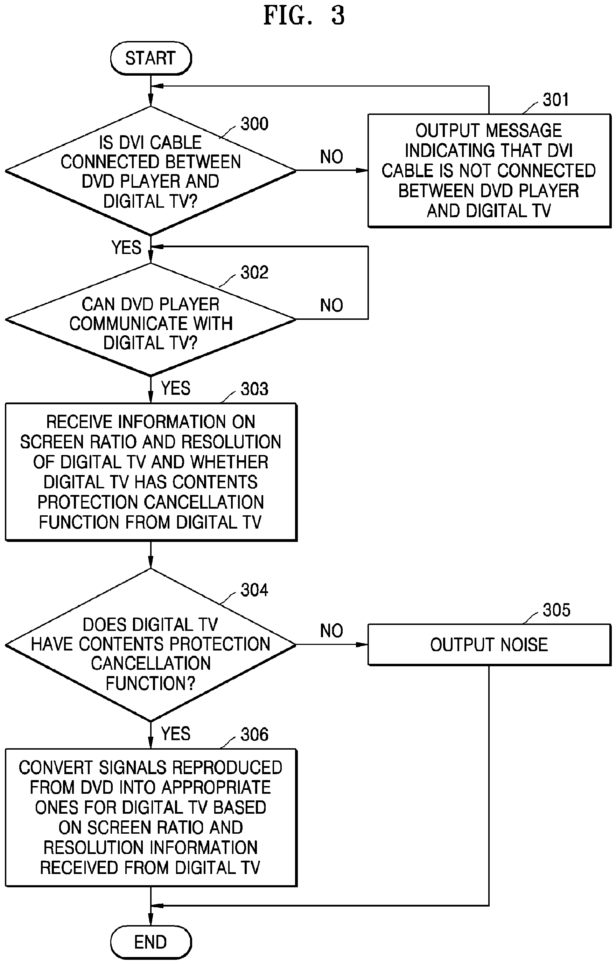

FIG. 3 is a flowchart of an exemplary operating method of a DVD player which is capable of setting an optimal display environment for a digital TV. Referring to FIG. 3, the method involves determining whether a DVI cable is connected between a DVD player and a digital TV at step 300, and outputting a message indicating that the DVI cable is not connected to the digital TV at step 301 if it is detected that the DVI cable is not connected to the digital TV. If the DVI cable is connected to the digital TV, the method then involves determining whether data communications between a DVD player and the digital TV can be carried out at step 302. If data communications can be carried out, the method then involves issuing to the digital TV a request for information and thereafter receiving information on the screen ratio and resolution of the digital TV, and information regarding whether the digital TV has a contents protection cancellation function at step 303.

The method then involves determining whether the digital TV has a contents protection cancellation function at step 304, and outputting noise if the digital TV does not have the contents protection cancellation function at step 305. If the digital TV does have the contents protection cancellation function, the method then involves converting signals reproduced by the DVD player into appropriate signals for the digital TV, and transmitting the converted signals to the digital TV at step 306.

A description of an example DVD player 200 for implementing the above method in accordance with an embodiment of the present invention is described in greater detail below.

In conventional applications and devices, the screen ratio and resolution of digital image data output from the DVD player 200 were manually set, regardless of the screen ratio and resolution of the digital TV 201. However, in embodiments of the present invention, the DVD player 200 receives specifications of the digital TV 201 by communicating with the digital TV 201 via a DVI or high definition multimedia interface (HDMI). Thereafter, the DVD player 200 automatically adjusts the screen ratio and resolution of its output digital image data to be compatible with the digital TV 201 by referring to the received specifications of the digital TV.

The DVD player 200 receives digital image data, and then transmits digital image data to the digital TV 201 in a DVI or HDMI manner via the DVI cable 202. The DVI cable 202 includes three data channels through which, data is transmitted between the DVD player 200 and the digital TV 201. The DVI cable 202 channels include a clock channel, through which clock signals are transmitted between the DVD player 200 and the digital TV 201, a display data channel (DDC), through which the DVD player 200 receives information on the display environment of the digital TV 201, and a hot-plug channel, which is used for checking whether the DVI cable 202 is connected between the DVD player 200 and the digital TV 201. Although only three channels are described, the DVI cable 202 can include any number of data channels depending on the application.

Prior to communication, the controller 200-1 of the DVD player 200 checks whether the DVI cable 202 is connected to the digital TV 201 using the hot-plug channel of the DVI channel 202.

For example, if the controller 200-1 receives a 5V signal from the hot-plug channel, then it determines that the DVI cable 202 is connected to the digital TV 201. However, if the controller 200-1 receives a 0V signal from the hot-plug channel, then it determines that the DVI cable 202 is not connected to the digital TV 201 and outputs a message indicating that the DVI cable 202 is not connected to the digital TV 201.

The I²C communications are performed between the DVD player 200 and the digital TV also using the DVI cable 202. Therefore, the controller 200-1 can check whether the DVD player 200 can communicate with the digital TV 201 by using the data channels of the DVI cable 202.

If the DVI cable 202 is connected to the digital TV 201, and the DVD player 200 can communicate with the digital TV 201 using the DVI cable 202, then the controller 200-1 issues a request for information necessary for setting a display environment to the digital TV 201 using the display data channel of the DVI cable 202.

The digital TV 201 then transmits the requested information necessary for setting a display environment to the DVD player 200 via the display data channel.

In this example, the information necessary for setting a display environment includes information on a screen ratio, resolution, and a contents protection cancellation function, wherein the contents protection cancellation function indicates a type of function for decrypting encrypted signals reproduced from a DVD.

The digital TV 201 can transmit 4:3 or 16:9 screen ratio information to the DVD player 200 via the display data channel. In addition, if the digital TV 201 is an NTSC TV, it can transmit 480i - 1080p resolution information to the DVD player 200. If the digital TV 201 is a PAL TV, it can transmit 576i - 1080p resolution information to the DVD player 200. Moreover, the digital TV 201 can further transmit information to the DVD player 200 regarding whether it includes the contents protection cancellation function.

If the controller 200-1 receives information indicating that the digital TV 201 does not have the contents protection cancellation function from the digital TV 201 via the display data channel, i.e., if the controller 200-1 receives information indicating that the digital TV 201 cannot decrypt encrypted signals reproduced from a DVD, then the controller 200-1 controls the signal converter 200-3 and the scaler 200-4 to stop operating, and thereafter outputs noise to the DVI cable 202 via the DVI jack 200-2.

Otherwise, the controller 200-1 controls the signals reproduced from the DVD based on the display environment information received from the digital TV 201 such that the signals can be converted into signals compatible with the display environment of the digital TV 201.

The controller 200-1 further controls the operation of the scaler 200-4. The scaler 200-4 scales the signals reproduced from the DVD (i.e., scaled up or down), by referring to the screen ratio information (such as a 16:9 screen ratio) and the resolution information (such as 1080p resolution) received from the digital TV 201, such that the scaled signals are compatible with the digital TV 201. The memory 200-5 serves as a buffer into and/or from which data is input and/or output for the scaling process.

The controller 200-1 still further controls the operation of the signal converter 200-3. The signal converter 200-3 converts the scaled signals into a DVI format and transmits the resultant signals to the digital TV 201 via the data channels of the DVI cable 202. Then, the digital TV 201 reproduces the signals received from the signal converter 200-3 in an optimal display environment that has been set therefor.

A detailed description of an example operating method of a DVD player, which is capable of setting an optimal display environment for a digital TV, is described in greater detail below.

Referring again to FIGS. 2 and 3, the controller 200-1 of the DVD player 200 first determines whether the DVI cable 202 is connected to the digital TV 201 in step 300. The controller 200-1 checks whether the DVI cable 202 is connected to the digital TV 201 using the hot-plug channel. For example, if the controller 200-1 receives a 5V signal from the hot-plug channel, it determines that the DVI cable 202 is connected to the digital TV 201.

However, if the DVI cable 202 is found to be disconnected from the digital TV 201, i.e., if the controller 200-1 receives a 0V signal from the hot-plug channel, the controller 200-1 then determines that the DVI cable 202 is not connected to the digital TV 201 and outputs a message indicating that the DVI cable 202 is not connected to the digital TV 201 in step 301.

If the DVI cable 202 is connected to the digital TV 201, the controller 200-1 then determines, in step 302, whether the DVD player 200 can communicate with the digital TV 201 by using the data channels of the DVI cable 202.

The I²C communications are performed between the DVD player 200 and the digital TV 201 using the DVI cable 202. Therefore, the controller 200-1 can check whether the DVD player 200 can communicate with the digital TV 201 by using the data channels of the DVI cable 202.

If the DVI cable 202 is connected to the digital TV 201, and the DVD player 200 can communicate with the digital TV 201 using the DVI cable 202, then the controller 200-1 issues a request for information which is necessary for setting a display environment, to the digital TV 201 using the display data channel of the DVI cable 202. The digital TV 201 then transmits the requested information necessary for setting a display environment to the DVD player 200 via the display data channel in step 303.

In this example, the information necessary for setting a display environment includes information on a screen ratio, resolution, and a contents protection cancellation function, wherein the contents protection cancellation function indicates a type of function for decrypting encrypted signals reproduced from a DVD.

The digital TV 201 can then, as noted above, transmit 4:3 or 16:9 screen ratio information to the DVD player 200 via the display data channel. In addition, if the digital TV 201 is an NTSC TV, it can transmit 480i - 1080p resolution information to the DVD player 200. If the digital TV 201 is a PAL TV, it can transmit 576i - 1080p resolution information to the DVD player 200. Moreover, the digital TV 201 can transmit information on whether it includes the contents protection cancellation function to the DVD player 200.

The controller 200-1 then determines from this information whether the digital TV includes the contents protection cancellation function in step 304.

If the controller 200-1 receives information indicating that the digital TV 201 does not have the contents protection cancellation function from the digital TV 201 via the display data channel, i.e., if the controller 200-1 receives information indicating that the digital TV 201 cannot decrypt encrypted signals reproduced from a DVD, then the controller 200-1 outputs noise to the DVI cable 202 in step 305.

Otherwise, in step 306, the controller 200-1 appropriately converts signals reproduced from the DVD based on the display environment information received from the digital TV 201 such that the resultant signals are compatible with the display environment of the digital TV 201, and then transmits the resultant signals to the digital TV 201 via the DVI cable 202.

As noted above, the controller 200-1 further controls the operation of the scaler 200-4. The scaler 200-4 scales the signals reproduced from the DVD (i.e., scaled up or down), by referring to the screen ratio information (such as a 16:9 screen ratio) and the resolution information (such as 1080p resolution) received from the digital TV 201, such that the scaled signals are compatible with the digital TV 201. The memory 200-5 serves as a buffer into and/or from which data is input and/or output for the scaling process.

The controller 200-1 still further controls the operation of the signal converter 200-3. The signal converter 200-3 converts the scaled signals into a DVI format and transmits the resultant signals to the digital TV 201 via the data channels of the DVI cable 202. Then, the digital TV 201 reproduces the signals received from the signal converter 200-3 in an optimal display environment that has been set therefor.

## Claims

1. A method for use in a DVD player (200), wherein the DVD player can be connected to a digital TV (201, 103) via a communication cable, to set an optimal display environment for the digital TV (201, 103), the method comprising:
(a) issuing a request for display environment setting information to the digital TV (201, 103) using a predetermined channel of the communication cable, and receiving the requested information from the digital TV (201, 103) using the predetermined channel once communications between the DVD player and the digital TV (201, 103) are initiated; and
(b) converting signals reproduced from a DVD included in the DVD player based on the received display environment setting information such that the signals are compatible with the digital TV (201, 103), and outputting the converted signals to the digital TV (201, 103) using the communication cable,
wherein in step (a), the display environment setting information comprises decodability function information regarding whether the digital TV (201,103) can decode encrypted signals reproduced from the DVD included in the DVD player.

2. The method of claim 1, wherein in step (a), the display environment setting information comprises information on the screen ratio of the digital TV (201, 103) .

3. The method of claim 2, wherein in step (b), the signals reproduced from the DVD included in the DVD player are converted based on the screen ratio information received from the digital TV (201,103) such that they become compatible with the digital TV (201,103).

4. The method of claim 1, wherein in step (a), the display environment setting information comprises information on the resolution of the digital TV (201,103).

5. The method of claim 4, wherein in step (b), the signals reproduced from the DVD included in the DVD player are converted based on the resolution information received from the digital TV (201,103) such that they become compatible with the digital TV (201,103).

6. The method of claim 1, wherein in step (b), if the decodability information is not received from the digital TV (201,103), noise is output to the communication cable regardless of the received display environment setting information.

7. A DVD player which can be connected to a digital TV (201,103) by a communication cable (202) and is capable of setting an optimal display environment for the digital TV (201,103), the DVD player (200) comprising:
a scaler (200-4), for scaling signals reproduced from a DVD included in the DVD player using the DVD player in response to a control signal;
a signal converter (200-3), for converting the scaled signals into appropriate signals for a display environment of the digital TV (201,103), and for outputting the resultant signals to the communication cable (202); and
a controller (200-1), for checking whether the communication cable (202) is connected to the digital TV (201,103), and for checking whether the DVD player (200) can communicate with the digital TV (201,103), wherein the controller (200-1) receives display environment setting information of the digital TV (201,103) and outputs the control signal based on the received display environment setting information,
wherein the controller (200-1) receives decodability information regarding whether the digital TV (201,103) can decode encrypted signals reproduced from the DVD included in the DVD player as the display environment setting information.

8. The DVD player of claim 7, wherein the controller (200-1) receives information regarding the screen ratio of the digital TV (201,103) as the display environment setting information.

9. The DVD player of claim 8, wherein the controller (200-1) provides a control signal to the scaler (200-4) which scales the signals reproduced from the DVD included in the DVD player based on the screen ratio information received from the digital TV (201,103) such that they become compatible with the digital TV (201,103).

10. The DVD player of claim 7, wherein the controller (200-1) receives information regarding the resolution of the digital TV (201,103) as the display environment setting information.

11. The DVD player of claim 10, wherein the controller (200-1) provides a control signal to the scaler (200-4) which scales the signals reproduced from the DVD included in the DVD player based on the resolution information received from the digital TV (201,103) such that they become compatible with the digital TV (201,103).

12. The DVD player of claim 7, wherein if the controller (200-1) does not receive the decodability information from the digital TV (201,103), the controller (200-1) outputs noise to the communication cable regardless of the display environment setting information received from the digital TV (201,103).

13. The DVD player of claim 7, wherein the scaler (200-4) scales the signals up or down in response to the control signal.

## Patentansprüche

1. Verfahren zur Verwendung in einem DVD-Player (200), wobei der DVD-Player über ein Kommunikationskabel mit einem Digitalfernseher (201, 103) verbunden werden kann, um eine optimale Anzeigeumgebung für den Digitalfernseher (201, 103) einzustellen, wobei das Verfahren umfasst:
(a) Ausgeben einer Anforderung nach Anzeigeumgebungseinstellungsinformationen an den Digitalfernseher (201, 103) unter Verwendung eines vorbestimmten Kanals des Kommunikationskabels, und Empfangen der von dem Digitalfernseher (201, 103) stammenden angeforderten Informationen unter Verwendung des vorbestimmten Kanals, sobald die Kommunikation zwischen dem DVD-Player und dem Digitalfernseher (201, 103) begonnen hat; und
(b) Umwandeln von Signalen, die von einer in dem DVD-Player enthaltenen DVD wiedergegeben werden, basierend auf den empfangenen Anzeigeumgebungseinstellungsinformationen, so dass die Signale mit dem Digitalfernseher (201, 103) kompatibel sind, und Ausgeben der umgewandelten Signale an den Digitalfernseher (201, 103) unter Verwendung des Kommunikationskabels,
wobei in dem Schritt (a) die Anzeigeumgebungseinstellungsinformationen Dekodierbarkeitsfunktionsinformationen umfassen in Bezug darauf, ob der Digitalfernseher (201, 103) verschlüsselte Signale, die von der in dem DVD-Player enthaltenen DVD wiedergegeben werden, decodieren kann.

2. Verfahren gemäß Anspruch 1, wobei in dem Schritt (a) die Anzeigeumgebungseinstellungsinformationen Informationen über das Bildschirmverhältnis des Digitalfernsehers (201, 103) umfassen.

3. Verfahren gemäß Anspruch 2, wobei in dem Schritt (b) die Signale, die von der in dem DVD-Player enthaltenen DVD wiedergegeben werden, basierend auf den empfangenen, von dem Digitalfernseher (201, 103) stammenden Informationen über das Bildschirmverhältnis umgewandelt werden, so dass sie mit dem Digitalfernseher (201, 103) kompatibel sind.

4. Verfahren gemäß Anspruch 1, wobei in dem Schritt (a) die Anzeigeumgebungseinstellungsinformationen Informationen über die Auflösung des Digitalfernsehers (201, 103) umfassen.

5. Verfahren gemäß Anspruch 4, wobei in dem Schritt (b) die Signale, die von der in dem DVD-Player enthaltenen DVD wiedergegeben werden, basierend auf den empfangenen, von den Digitalfernseher (201, 103) stammenden Informationen über die Auflösung umgewandelt werden, so dass sie mit dem Digitalfernseher (201, 103) kompatibel sind.

6. Verfahren gemäß Anspruch 1, wobei in dem Schritt (b), wenn keine von dem Digitalfernseher (201, 103) stammenden Dekodierbarkeitsfunktionsinformationen empfangen werden, unabhängig von den empfangenen Anzeigeumgebungseinstellungsinformationen Rauschen an das Kommunikationskabel ausgegeben wird.

7. DVD-Player (200), der über ein Kommunikationskabel (202) mit einem Digitalfernseher (201, 103) verbunden werden kann und eine optimale Anzeigeumgebung für den Digitalfernseher (201, 103) einstellen kann, wobei der DVD-Player (200) umfasst:
einen Skalierer (200-4) zum Skalieren von Signalen, die von einer in dem DVD-Player enthaltenen DVD wiedergegeben werden, unter Verwendung des DVD-Players, als Reaktion auf ein Steuersignal;
einen Signalwandler (200-3) zum Umwandeln des skalierten Signals in für eine Anzeigeumgebung des Digitalfernsehers (201, 103) geeignete Signale, und zum Ausgeben der resultierenden Signale an das Kommunikationskabel (202); und
eine Steuerung (200-1) zur Prüfung, ob das Kommunikationskabel (202) mit dem Digitalfernseher (201, 103) verbunden ist, und zur Prüfung, ob der DVD-Player (200) mit dem Digitalfernseher (201, 103) kommunizieren kann,
wobei die Steuerung (200-1) Anzeigeumgebungseinstellungsinformationen des Digitalfernsehers (201, 103) empfängt und das Steuersignal basierend auf den empfangenen Anzeigeumgebungseinstellungsinformationen ausgibt,
wobei die Steuerung (200-1) Dekodierbarkeitsfunktionsinformationen empfängt in Bezug darauf, ob der Digitalfernseher verschlüsselte Signale, die von der in dem DVD-Player enthaltenen DVD wiedergegeben werden, als Anzeigeumgebungseinstellungsinformationen decodieren kann.

8. DVD-Player gemäß Anspruch 7, wobei die Steuerung (200-1) Informationen über das Bildschirmverhältnis des Digitalfernsehers (201, 103) als Anzeigeumgebungseinstellungsinformationen empfängt.

9. DVD-Player gemäß Anspruch 8, wobei die Steuerung (200-1) dem Skalierer (200-4) ein Steuersignal zur Verfügung stellt, welcher Skalierer die Signale, die von der in dem DVD-Player enthaltenen DVD wiedergegeben werden, basierend auf den empfangenen, von dem Digitalfernseher (201, 103) stammenden Informationen über das Bildschirmverhältnis skaliert, so dass sie mit dem Digitalfernseher (201, 103) kompatibel sind.

10. DVD-Player gemäß Anspruch 7, wobei die Steuerung (200-1) Informationen über die Auflösung des Digitalfernsehers (201, 103) als Anzeigeumgebungseinstellungsinformationen empfängt.

11. DVD-Player gemäß Anspruch 10, wobei die Steuerung (200-1) dem Skalierer (200-4) ein Steuersignal zur Verfügung stellt, welcher Skalierer die Signale, die von der in dem DVD-Player enthaltenen DVD wiedergegeben werden, basierend auf den empfangenen, von dem Digitalfernseher (201, 103) stammenden Informationen über die Auflösung skaliert, so dass sie mit dem Digitalfernseher (201, 103) kompatibel sind.

12. DVD-Player gemäß Anspruch 7, wobei, wenn die Steuerung (200-1) keine von dem Digitalfernseher (201, 103) stammenden Dekodierbarkeitsinformationen empfängt, die Steuerung (200-1) unabhängig von den empfangenen, von dem Digitalfernseher (201, 103) stammenden Anzeigeumgebungseinstellungsinformationen Rauschen an das Kommunikationskabel ausgibt.

13. DVD-Player gemäß Anspruch 7, wobei der Skalierer (200-4) die Signale als Reaktion auf das Steuersignal nach oben oder unten skaliert.

## Revendications

1. Procédé mis en oeuvre dans un lecteur DVD (200), dans lequel le lecteur DVD peut être branché à un téléviseur numérique (201, 103) par un câble de communication, pour régler un environnement d'affichage optimal pour le téléviseur numérique (201, 103), le procédé comprenant :
(a) l'émission d'une demande d'informations de réglage d'environnement d'affichage auprès du téléviseur numérique (201, 103) par le biais d'un canal prédéterminé du câble de communication, et la réception des informations demandées en provenance du téléviseur numérique (201, 103) au moyen du canal prédéterminé une fois que la communication entre le lecteur DVD et le téléviseur numérique (201, 103) a été établie, et
(b) la conversion des signaux lus sur un DVD présent dans le lecteur DVD en fonction des informations de réglage d'environnement d'affichage reçues de manière que les signaux soient compatibles avec le téléviseur numérique (201, 103), et l'émission des signaux convertis auprès du téléviseur numérique (201, 103) au moyen du câble de communication ;
dans lequel, dans l'étape (a), les informations de réglage d'environnement d'affichage comprennent des informations de fonction de décodabilité relatives à l'aptitude du téléviseur numérique (201, 103) à décoder les signaux cryptés lus sur le DVD présent dans le lecteur DVD.

2. Procédé selon la revendication 1, dans lequel, dans l'étape (a), les informations de réglage d'environnement d'affichage comprennent des informations concernant le rapport d'aspect du téléviseur numérique (201, 103).

3. Procédé selon la revendication 2, dans lequel, dans l'étape (b), les signaux lus sur le DVD présent dans le lecteur DVD sont convertis en fonction des informations de rapport d'aspect reçues en provenance du téléviseur numérique (201, 103) de manière à être compatibles avec le téléviseur numérique (201, 103).

4. Procédé selon la revendication 1, dans lequel, dans l'étape (a), les informations de réglage d'environnement d'affichage comprennent des informations concernant la résolution du téléviseur numérique (201, 103).

5. Procédé selon la revendication 4, dans lequel, dans l'étape (b), les signaux lus sur le DVD présent dans le lecteur DVD sont convertis en fonction des informations de résolution reçues en provenance du téléviseur numérique (201, 103) de manière à être compatibles avec le téléviseur numérique (201, 103).

6. Procédé selon la revendication 1, dans lequel, dans l'étape (b), si les informations de décodabilité ne sont pas reçues en provenance du téléviseur numérique (201, 103), du bruit est émis dans le câble de communication indépendamment des informations de réglage d'environnement d'affichage reçues.

7. Lecteur DVD (200), susceptible d'être branché à un téléviseur numérique (201, 103) par le biais d'un câble de communication (202) et capable de régler un environnement d'affichage optimal pour le téléviseur numérique (201, 103), le lecteur DVD (200) comprenant :
un circuit de mise à l'échelle (200-4) destiné à mettre à l'échelle les signaux lus sur un DVD présent dans le lecteur DVD au moyen du lecteur DVD en réaction à un signal de commande,
un convertisseur de signaux (200-3) destiné à convertir les signaux mis à l'échelle en des signaux appropriés à l'environnement d'affichage du téléviseur numérique (201, 103), et destiné à émettre les signaux résultants dans le câble de communication (202), et
un organe de commande (200-1) destiné à vérifier si le câble de communication (202) est branché au téléviseur numérique (201, 103), et destiné à vérifier si le lecteur DVD (200) peut communiquer avec le téléviseur numérique (201, 103) ;
dans lequel l'organe de commande (200-1) reçoit des informations de réglage d'environnement d'affichage du téléviseur numérique (201, 103) et émet le signal de commande en fonction des informations de réglage d'environnement d'affichage reçues,
dans lequel l'organe de commande (200-1) reçoit des informations de décodabilité relatives à l'aptitude du téléviseur numérique (201, 103) à décoder les signaux cryptés lus sur le DVD présent dans le lecteur DVD en tant qu'informations de réglage d'environnement d'affichage.

8. Lecteur DVD selon la revendication 7, dans lequel l'organe de commande (200-1) reçoit des informations relatives au rapport d'aspect du téléviseur numérique (201, 103) en tant qu'informations de réglage d'environnement d'affichage.

9. Lecteur DVD selon la revendication 8, dans lequel l'organe de commande (200-1) fournit un signal de commande au circuit de mise à l'échelle (200-4) qui met à l'échelle les signaux lus sur le DVD présent dans le lecteur DVD en fonction des informations de rapport d'aspect reçues en provenance du téléviseur numérique (201, 103) de manière qu'ils soient compatibles avec le téléviseur numérique (201, 103).

10. Lecteur DVD selon la revendication 7, dans lequel l'organe de commande (200-1) reçoit des informations relatives à la résolution du téléviseur numérique (201, 103) en tant qu'informations de réglage d'environnement d'affichage.

11. Lecteur DVD selon la revendication 10, dans lequel l'organe de commande (200-1) fournit un signal de commande au circuit de mise à l'échelle (200-4) qui met à l'échelle les signaux lus sur le DVD présent dans le lecteur DVD en fonction des informations de résolution reçues en provenance du téléviseur numérique (201, 103) de manière qu'ils soient compatibles avec le téléviseur numérique (201, 103).

12. Lecteur DVD selon la revendication 7, dans lequel, si l'organe de commande (200-1) ne reçoit pas les informations de décodabilité en provenance du téléviseur numérique (201, 103), l'organe de commande (200-1) émet du bruit dans le câble de communication indépendamment des informations de réglage d'environnement d'affichage reçues en provenance du téléviseur numérique (201, 103).

13. Lecteur DVD selon la revendication 7, dans lequel le circuit de mise à l'échelle (200-4) effectue une mise l'échelle supérieure ou inférieure des signaux en réaction au signal de commande.
